Europäisches Patentamt

European Patent Office

Office européen des brevets

(11) Numéro de publication: **0 243 242**
**A1**

## (12) DEMANDE DE BREVET EUROPEEN

(21) Numéro de dépôt: 87400854.3

(22) Date de dépôt: 15.04.87

(51) Int. Cl.⁴: **G 01 S 11/00**
**B 66 C 15/04**

(30) Priorité: 18.04.86 FR 8605585

(43) Date de publication de la demande:
28.10.87 Bulletin 87/44

(84) Etats contractants désignés:
AT BE DE GB IT NL SE

(71) Demandeur: **Josse, Etienne**
**7 Avenue Pierre Grenier**
**F-92100 Boulogne Billancourt (FR)**

(72) Inventeur: **Josse, Etienne**
**7 Avenue Pierre Grenier**
**F-92100 Boulogne Billancourt (FR)**

(54) **Dispositif de détection de la distance séparant deux points mobiles.**

(57) L'invention concerne un dispositif permettant de mesurer une distance ou une vitesse de rapprochement de deux points, dont l'un au moins est mobile, dans le but d'éviter leur collision.

Au premier point est disposé un émetteur d'ondes électromagnétiques, au deuxième point un (ou plusieurs) récepteur, qui engendre une tension proportionnelle au champ électromagnétique reçu, fonction de la distance séparant les deux points. Des signaux sont délivrés lorsque cette tension dépasse certains seuils, et éventuellement lorsque la vitesse de rapprochement, fonction de la variation de tension, est trop grande. Pour obtenir une mesure précise, la fréquence du champ électromagnétique émis par l'émetteur doit être relativement basse, inférieure à 10 kHz, pour que le champ ne soit pas perturbé par les matériaux conducteurs environnants. La fréquence devra aussi être supérieure à 100 Hz pour ne pas être perturbée par le rayonnement électromagnétique du réseau à 50 ou 60Hz.

Le dispositif est particulièrement destiné à prévenir la collision de deux mobiles, tels que des grues évoluant dans une zone commune d'action sur un même chantier.

FIG. 1

Bundesdruckerei Berlin

## Description

### - DISPOSITIF DE DETECTION DE LA DISTANCE SEPARANT DEUX POINTS MOBILES -

La présente invention concerne un dispositif de détection de la distance séparant deux points, dont l'un au moins est mobile, lorsque cette distance devient dangereuse et risquerait de provoquer une collision.

Le dispositif utilise un émetteur et au moins un récepteur d'ondes électromagnétiques omnidirectionnelles à basse fréquence, disposés aux deux points où l'on veut détecter la distance qui les sépare. La détection de distance est ramenée à la mesure de la tension électrique induite par l'émetteur dans le récepteur, au moyen d'un amplificateur et d'un détecteur de seuil de tension.

L'invention peut être utilisée en particulier pour éviter la collision de deux engins mobiles tels que chariots, ponts-roulants ou grues. Un détecteur de seuil de tension prévient alors lorsque la distance qui les sépare est inférieure à la distance de sécurité. En pratique, cette distance de sécurité est fonction de la vitesse relative des deux mobiles et peut être de quelques mètres à quelques dizaines de mètres. La tension induite est fonction de la distance qui sépare l'émetteur du (ou des ) récepteur, et on peut ainsi mesurer la vitesse relative par une mesure adéquate de la dérivée de la tension.

On connaît déjà les détecteurs de proximité, du type électromagnétique, qui permettent par la mesure de la variation de réactance de faire des mesures de distances courtes, c'est-à-dire de quelques centimètres. Il existe aussi des appareils à très haute fréquence, du type radar, qui permettent de mesurer la distance et la vitesse relative de deux mobiles à n'importe quelle distance, mais ces appareils sont très onéreux et, par exemple dans le cas de deux grues, ne conviennent pas parce que non omnidirectionnelles.

Aussi la présente invention a pour but de permettre une mesure précise d'une distance de quelques mètres à quelques dizaines de mètres qui sépare deux points dont l'un au moins est mobile.

Ce but est atteint au moyen d'un procédé qui consiste à :

- disposer au premier point mobile un émetteur destiné à produire un champ électromagnétique omnidirectionnel, à une fréquence fixe, comprise entre 100 Hz et 10 kHz.
- disposer au deuxième point fixe ou mobile un récepteur produisant une tension dont l'amplitude est proportionnelle à l'intensité du champ magnétique engendré par l'émetteur.
- mesurer l'amplitude de la tension induite dans le récepteur au moyen d'un amplificateur sélectif.
- produire un signal sonore ou lumineux lorsque la tension mesurée dépasse un certain seuil.

Pour effectuer une mesure précise de la distance, à moins de 5% près, il est nécessaire que la fréquence du champ électromagnétique engendré par l'émetteur soit relativement basse : comprise entre 100 Hz et 10 kHz. Les meilleurs résultats sont obtenus pour des fréquences de 500 Hz à 2 kHz, lorsque les distances à mesurer sont inférieures à 15-20m. Pour les fréquences inférieures à 100 Hz, le rayonnement parasite électromagnétique produit par les lignes du réseau électrique à 50 Hz environnant risque de perturber la mesure, même avec un amplificateur très sélectif, et par ailleurs, le niveau de tension reçu par le récepteur étant proportionnel à la fréquence, les fréquences très basses ne conviennent pas pour des distances supérieures à 5m. Pour de fréquences supérieures à 10 kHz, le champ électromagnétique engendré par l'émetteur est perturbé par la proximité des matériaux conducteurs magnétiques ou non qui se trouvent au voisinage de l'émetteur et du récepteur. Pour des mesures de distance inférieures à 20m environ, le générateur de fréquence de l'émetteur, piloté par un quartz, peut être alimenté par des piles courantes du commerce. Le générateur et les piles peuvent alors être incorporés dans le boîtier de l'émetteur et ainsi assurer une autonomie de fonctionnement permanent pendant plus d'un an.

L'amplificateur qui reçoit la tension induite du récepteur comporte des filtres passe-bande de façon à obtenir une bonne sélectivité et ainsi ne pas être perturbé par les parasites du champ électromagnétique environnant, engendrés par les appareils électriques courants.

Pratiquement, l'émetteur et le récepteur sont constitués par un enroulement en fil de cuivre émaillé autour d'un noyau en ferrite magnétique doux. Afin de réduire les pertes capacitives entre couches de fils, l'enroulement est constitué par un empilement de 5 à 20 bobines de fil de cuivre, reliées en série. Pour des fréquences supérieures à quelques centaines de Hz, cette disposition permet d'obtenir une bien meilleure efficacité de récepteur et un meilleur rendement de l'émetteur. Un condensateur relié avec l'enroulement et accordé avec sa réactance constitue un filtre passe-bande qui permet d'augmenter la sélectivité et l'efficacité du système.

D'autres particularités du dispositif conforme à l'invention ressortiront à la lecture de la description détaillée faite ci-après, à titre indicatif, mais non limitatif, en référence aux dessins annexés, sur lesquels:

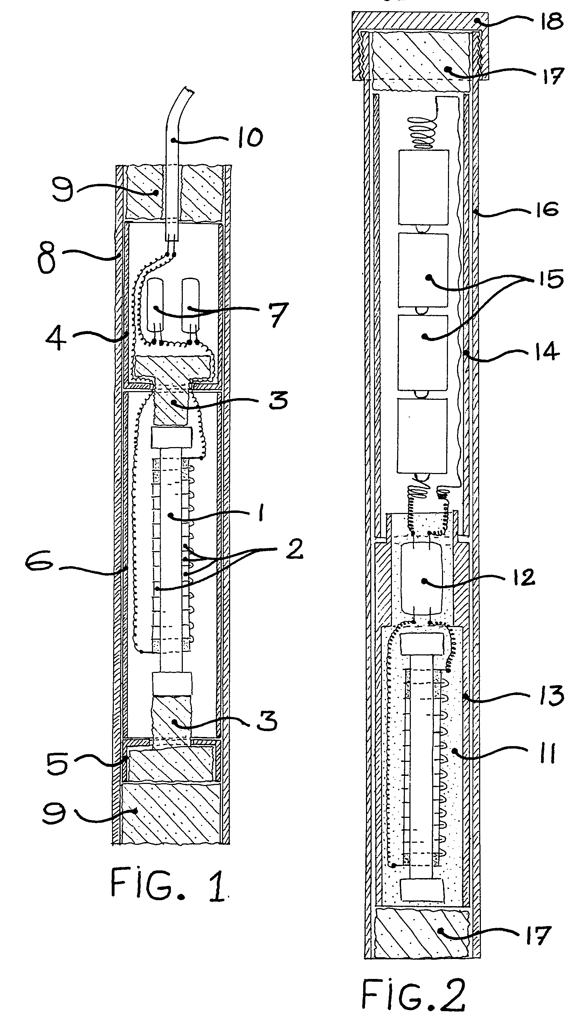

- La figure 1 représente une coupe détaillée du récepteur selon l'invention qui comporte le barreau cylindrique en ferrite magnétique (1) sur lequel est disposé un empilement de bobines de fil de cuivre (2). Cet ensemble comporte une suspension souple réalisée en mastic silicone (3) collé sur le barreau en ferrite et noyé dans un tube isolant genre PVC (4) (5). Ces deux tubes sont maintenus par un autre tube en PVO (6). Le condensateur d'accord (7) est placé dans le tube supérieur (4). Le tout est enfermé dans un tube isolant genre PVC (8) fermé à ses extrémités par des bouchons (9) en mastic silicone de façon à rendre le système parfaitement étanche. Le câble de liaison (10) à l'amplificateur externe traverse le bouchon supérieur.

- La figure 2 représente une coupe détaillée de l'émetteur selon l'invention, qui comporte un barreau en ferrite et un enroulement en fil de cuivre tout à fait semblables à ceux du récepteur. La suspension souple est remplacée par un bourrage en matière synthétique souple (11). L'enroulement, les condensateurs et le générateur (12) sont placés dans un même tube isolant (13). Un tube amovible (14) reçoit les piles électriques (15) destinées à alimenter le générateur. L'ensemble est enfermé dans un tube isolant (16), fermé à ses extrémités par des bouchons (17) en matic silicone. Un bouchon à vis (18) permet de bloquer les 2 tubes (13) et (14), et permet de retirer facilement le tube contenent les piles (14).

On comprendra mieux l'intérêt du dispositif en décrivant l'application de l'invention à un ensemble de deux grues qui évoluent sur un même chantier, avec une zone commune d'action. Les deux flèches des grues sont disposée s à des hauteurs différentes de façon à ne pas se rencontrer, mais la flèche la plus basse peut heurter le câble du treuil de levage de la flèche la plus haute et provoquer ainsi de graves dégats humains et matériels. L'émetteur est placé sur le chariot du treuil de levage de la flèche la plus haute, à l'altitude de la flèche la plus basse, l'axe de l'émetteur étant vertical. Il est à noter que l'émetteur se déplaçant avec le chariot, il est très intéressant de le rendre autonome avec une alimentation par piles incorporées de façon à éviter de disposer un câble électrique devant se déplacer avec le chariot.

Un ou plusieurs récepteurs, dont les axes sont verticaux, sont placés sur la flèche la plus basse, et reliés à l'amplificateur par un ou plusieurs câbles. L'amplificateur, placé dans la cabine de conduite, comporte deux détecteurs de seuil, l'un règlé pour une distance séparant émetteur et récepteur de 5 m environ, l'autre pour une distance de 10 à 15m. Les détecteurs actionnant alors des signaux d'alarme sonores ou lumineux, les personnes chargées de la conduite des grues sont prévenues du risque de collision. Un troisième seuil peut également prévenir, lorsque la vitesse de rapprochement est trop grande ; ce troisième seuil est mis en route par un circuit électronique qui élabore, à partir de la tension induite dans le ou les récepteurs, un signal proportionnel à la vitesse de rapprochement de l'émetteur et du ou des récepteurs.

**Revendications**

1 - Dispositif utilisant la propagation d'ondes électromagnétiques pour signaler le rapprochement d'un premier point mobile d'un deuxième point fixe ou mobile, dans le but d'éviter leur collision, en disposant au premier point mobile un émetteur destiné à engendrer un champ électromagnétique omnidirectionnel, au deuxième point fixe ou mobile, un récepteur qui engendre une tension proportionnelle au champ magnétique émis par l'émetteur, qui amplifiée par un amplificateur sélectif, produit un signal lorsque cette tension dépasse un certain seuil, caractérisé en ce que l'émetteur engendre un champ magnétique à fréquence fixe comprise entre 100 Hz et 10 kHz, et que l'émetteur et le récepteur sont constitués par un empilement de 5 à 20 bobines de fil de cuivre émaillé, reliées en série et disposées autour d'un noyau central en ferrite magnétique doux.

2 - Dispositif selon revendication 1, caractérisé par le fait que la fréquence fixe de l'émetteur est comprise entre 500 Hz et 2 kHz.

3 - Dispositif selon les revendications 1 et 2, caractérisé par le fait que l'on dispose au deuxième point fixe ou mobile plusieurs récepteurs reliés en parallèles.

4 - Dispositif selon les revendications 1 et 2, caractérisé par le fait que l'émetteur est alimenté par des piles électriques qui sont placées dans un unique boîtier, regroupant émetteur-générateur-piles, permettant d'assurer une autonomie de fonctionnement permanent pendant une année.

5 - Dispositif selon les revendication 1, 2 et 3, caractérisé par le fait que l'amplificateur élabore une fonction composite de la distance et de la vitesse de rapprochement de l'émetteur et du (ou des) récepteur, et produit un signal lorsque cette fonction composite dépasse un certain seuil.

6 - Dispositif selon les revendications précédentes, caractérisé par le fait que le premier point mobile est constitué par le chariot du treuil d'une grue de levage, le deuxième point mobile constitué par la flèche d'une autre grue, les grues ayant une zone commune d'action.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 030 088 (D.J. McCULLOUGH) * Figures 1,3A,3,; colonne 6, ligne 54 - colonne 8, ligne 3; colonne 9, ligne 26 - colonne 12, ligne 59 * | 1,3,5, 6 | G 01 S 11/00 B 66 C 15/04 |
| | --- | | |
| Y | FR-A-2 416 190 (DELACHAUX) * Figures 1,2; page 4, ligne 2 - page 9, ligne 35 * | 1,3,5, 6 | |
| | --- | | |
| Y | FR-A-2 537 119 (LES CHANTIERS MODERNES) * Figures 1,2; page 2, ligne 17 - page 3, ligne 13 * | 3 | |
| | --- | | |
| A | DE-B-1 250 511 (K. WACHTEL) | | **DOMAINES TECHNIQUES RECHERCHES (Int. Cl.4)** |
| | ----- | | G 01 S B 61 L B 66 C |

Le présent rapport de recherche a été établi pour toutes les revendications

| Lieu de la recherche | Date d'achèvement de la recherche | Examinateur |
|---|---|---|
| LA HAYE | 17-07-1987 | CANNARD J.M. |